# EUROPEAN PATENT SPECIFICATION

(11) **EP 1 873 190 B1**
(45) Date of publication and mention of the grant of the patent: **23.02.2011**
(21) Application number: 06425369.3
(22) Date of filing: 30.05.2006
(51) Int. Cl.: C08J 3/00, C08J 3/07, C08J 5/22, C08L 75/06, C08L 75/04, C08L 27/18, C08K 3/24, C08K 3/40

(54) **Method for the mechano-chemical treatment of materials comprising at least one polymer in the liquid state**
Verfahren zum mechanischen und chemischen Behandeln von Materialen, die zumindestens ein Polymer in flüssigem Zustand enthalten
Méthode de traitement mécanico-chimique de matériaux comprenant au moins un polymère à l'état liquide

(43) Date of publication of application: 02.01.2008
(73) Proprietor: Vagotex Windtex S.p.A., 37030 Colognola ai Colli VR (IT); MBN Nanomaterialia SpA, 31050 Vascon di Carbonera (IT)
(72) Inventor: Matteazzi, Paolo, 31100 Treviso (IT); Basset, Diego, 31020 San Vendemiano (Treviso) (IT); Fiorio, Ferdinando, 37030 Lavagno (Verona) (IT)
(74) Representative: Agostini, Agostino

(56) References cited:
- EP-A2- 0 365 448
- EP-A2- 0 850 700
- WO-A1-00/02638
- WO-A2-02/38197
- DE-A1- 2 351 077
- DE-A1- 19 822 979
- DE-A1- 19 855 889
- GB-A- 1 108 261
- GB-A- 1 190 417
- US-A- 2 653 919
- US-A- 5 306 550
- US-A- 5 874 521
- US-A- 6 060 540
- DATABASE WPI Week 200042 Derwent Publications Ltd., London, GB; AN 2000-477555 XP002403334 & JP 2000 143938 A (NIPPON KAYAKU KK) 26 May 2000 (2000-05-26)
- DATABASE WPI Week 200539 Derwent Publications Ltd., London, GB; AN 2005-376451 XP002403335 -& JP 2005 124996 A (NIKAIDO T) 19 May 2005 (2005-05-19)
- DATABASE WPI Week 200038 Derwent Publications Ltd., London, GB; AN 2000-434072 XP002403336 -& JP 2000 143940 A (NIPPON KAYAKU KK) 26 May 2000 (2000-05-26)
- DATABASE WPI Week 200473 Derwent Publications Ltd., London, GB; AN 2004-740805 XP002403337 & JP 2004 290800 A (DAIICHI KOGYO SEIYAKU CO LTD) 21 October 2004 (2004-10-21)

## Description

### Technical Field of the Invention

The present invention refers to a method for mechano-chemically treating materials comprising one or more polymers in view of modifying the chemical/physical properties thereof, as well as to a plurality of products obtainable with such method

As used in this specification, the term "polymer alloys" shall be understood as meaning mixtures, or blends of two or more polymers characterized by cross-links, existing between the chains of the polymers in the mixture. These polymer alloys shall therefore not be understood as being purely physical mixtures where such cross-links are not present at all. As again used in this specification, the term "composite polymers" shall furthermore be understood as meaning polymers in which there are included solid, non-polymeric substances.

### Background and Related Art

It is a generally known fact that polymeric materials are used in the form of compounds - where they are combined either with different polymers or specific additives - in order to enlarge their properties and to feature specific properties for each specific type of application.

However, the processability of these compounds at the liquid or viscous state thereof, as well as their stability in the long run and under high-temperature conditions can be severely impaired by such occurrences as phases coalescence, each of the phases consisting of a component of the compound which is physically and chemically homogeneous, or impaired by a low miscibility of the varios polymers.

Last not least, in the particular case of additives, there is always a serious risk connected that - even if in the long run - the additives may show health-endangering and/or environmentally harmful properties or that anyway the additives fail to reach in the matrix, i.e. in the prevailing phase, any appreciably high level or degree of integration, as measurable based on both the size of the same additives and the bond set up by the additives with the matrix.

In view of solving these problems, a number of mechano-chemical methods have been developed, which are able to promote and maintain an intimate mixing - ideally submicrometric or nanometric - of the elementary components of the polymeric phases, even in those cases in which that the phases are not thermodynamically miscible, the mixture being obtained by high-energy milling with no use of additives such as chemical dispersers or compatibilizers.

Such high-energy grinding is a process making use of mechano-chemical reactors in which very high local impact energies are reached by the milling means, with specific energy values of not less than 400 W/dm³ of treated material, i.e. net of the milling means.

An example of high-energy mill is disclosed and claimed in European patent No. 665 770, which has two of its inventors *in common* with this patent application, the contents of which being totally incorporated by reference in this patent. Disclosed in the above-mentioned patent is an oscillating ball mill comprising a driving system, a grinding jar, a bearing system and an elastic system wherein the compensation of the inertial forces is performed by said elastic system and the motion of the grinding jar is substantially along an axis.

In this connection, the Applicants are of the opinion that the most relevant state of the art in the treatment of at least partially polymeric materials by means of high-energy mills is constituted by : Perry's Chemical Engineers Handbook, 7th Ed., McGraw-Hill, N.Y. 1997, Sec. 20; the European patent No. 850 700, which in turn has two of its inventors in common with this patent application, the contents of which being totally incorporated by reference in this patent; the US patents Nos. 5 367 048 and 5 874 521.

In the last-mentioned patent publications it is envisaged to use high-energy grinding mills to produce polymer alloys by processing at temperatures below the melting point polymer materials that are solely in the form of solid particles.

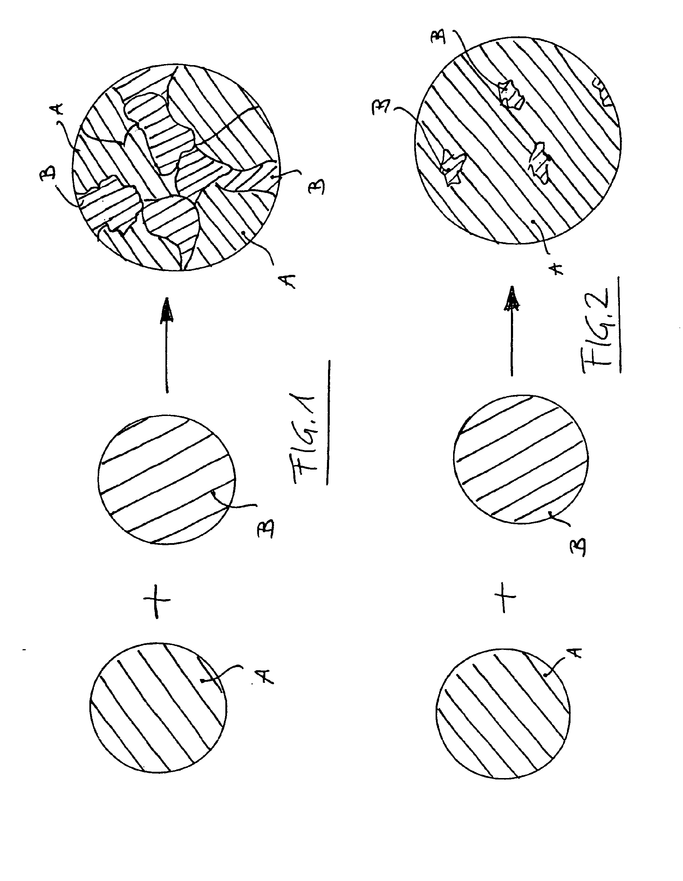

Shown schematically in the accompanying Figure 1 of the present specification is the result of using high-energy grinding mills when the two elementary components (A) and (B) of the mixture are in the form of solid particles, at least one of the components being a polymeric material. The resulting structure is - so to say - a kind of mosaic formed of juxtaposed particles of (A) and (B), in the respective proportions. This practically poses definite limitations to such kind of structures as far as not only the fields of application thereof, but also the mixing scale thereof is concerned, since the latter is necessarily limited by the solid-to-solid reactions.

*Worth mention is also the patent* GB-A-1 190 417*, based on a German application dated 1966, where is disclosed a process for the production of magnetic recording media in which dispersions of ferromagnetic substances are applied to a backing. The dispersions comprise a block copolymer of butadiene, a solvent such as toluene and a particulate ferromagnetic substance, these components being mixed and homogenized in a conventional manner, for example by means of a stirred ball mill, a ball mill or a pebble mill.*

### Object of the Invention

It is therefore a main object of the present invention to provide a method for treating one or more materials, the one of which that is the sole component or forms the prevailing elementary component (i.e. is present in the highest proportion by weight in the mixture) is a polymer in the liquid state, so as to modify the chemical/physical properties and performance capabilities thereof in accordance with the particular field of use, while doing away with the afore-cited drawbacks and risks and, of course, without the current limitations posed to the mixing scale of the components, when there are more than one of such components in the mixture.

The method of the present invention is carried out in a high-energy grinding mill at specific-energy values of the milling means of not less than 400 W/dm³ of treated material, i.e. net of the milling means themselves, to obtain an increase or decrease by at least 2% of the molecular weight of the polymer.

Within this general object, it is a purpose of the present invention is to meet industry's needs requiring materials having premium special-purpose properties to be available in large quantities and at low costs so as to be also usable in the production of non-durable consumer goods.

According to the present invention, these and further objects are basically reached by a treatment method, as defined and recited in the appended claims, making use of a mechano-chemical reactor (high-energy grinding mill) for treating a polymer that is in its liquid state under processing conditions, i.e. in any of the following conditions:
- the polymer is naturally in a liquid state at ambient temperature;
- the polymer is inherently solid or semi-solid, but is brought to liquid state through the use of one or more solvents;
- the polymer is inherently solid or semi-solid, but is brought to liquid state through heating prior to being introduced in the high-energy grinding mill;
- the polymer is inherently viscous, but is brought to liquid state by the heat generated by the mechanical action produced inside the high-energy grinding mill.

Such liquid-state polymer may be mixed with other materials, either polymeric or non-polymeric, which may in turn be in a liquid state or in a solid state. Preferably, although not solely, the liquid polymer is the prevailing elementary component in the mixture, i.e. the component that is present in the highest weight-based proportion.

Further, equally important objects of the present invention are :
- the modified polymers, the polymeric alloys and the composite polymers that can be obtained with the method of the present invention;
- the use of said polymeric alloys and composite polymers to produce an elastic transpiring membrane and a protective coating for wooden floors, along with the method for producing them.

### Brief Description of the Drawings

- Figure 1 is a schematical view of the structure resulting from a treatment according to the prior art, as already explained hereinbefore, i.e. when the two elementary components (A) and (B), of which at least one is a polymer, are in the form of solid particles.
- Figure 2 is a similar view as the one appearing in Figure 1, however illustrating the result of the treatment with a high-energy grinding mill when, according to the method of the present invention, at least the component (A) of said two elementary components (A) and (B) is a polymer in its liquid state under processing conditions.
- Figure 3 is a micrograph of a composite polymer obtained with the method according to the present invention.

### Summary of the Invention

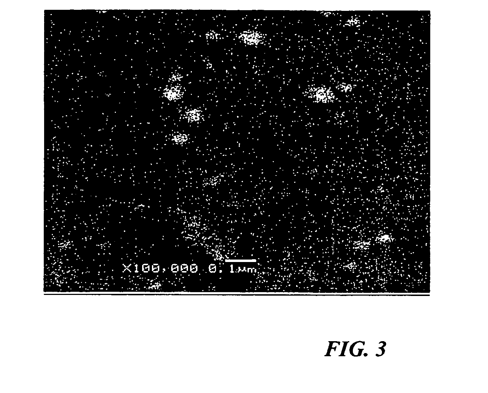

In the first place, Figure 2 (a schematical representation relating to the present invention) and Figure 3 (a micrograph relating to the present invention) should be considered in comparison with, i.e. on the background of Figure 1 (a schematical representation relating to the prior art). By using a liquid polymer as an elementary component (A), which forms the prevailing phase in this example, i.e. the component being present in the greatest proportion by weight inside the high-energy grinding mill, this polymer fully surrounds the elementary particles of the second elementary component (B). According to the present invention, following the inventive mechano-chemical treatment of the component (A), i.e. a polymer that is in its liquid state under processing conditions, at least 80 wt-% of the component (B) is formed by particles having a size of up to 30 micrometers max., i.e. 30 x 10⁻⁶ metres. In this way, the chemical/physical properties of the component (A) are modified and, in particular, the molecular weight is altered, i.e. increased and/or decreased by at least 2% according to the particular case.

This result is obtained owing mainly to following occurrences taking place in the high-energy grinding mill :
- break-up of the molecular chains of the liquid polymer;
- formation of free radicals;
- creation of new links with other molecules of the component (A) and/or the component (B). In the case that the sole liquid polymer is undergoing mechano-chemical treatment in the high-energy grinding mill, these new bonds are created with other molecules of the same polymer.

### Preferred Embodiments of the Invention

A first embodiment of the present invention relates to the production by a mechano-chemical method of polymeric alloys that can be used in the form of elastic transpiring membranes, which are characterized in that they have a barrier effect against, for instance, weather agents, while being at the same time permeable to water vapour. Properties like these make such novel kind of membranes particularly suitable for ideal application in garments and footwear not only for professional, sports, military and similar uses, but even for everyday use, in view of ensuring effective protection against water and wind, promoting comfortableness and thermoregulation, and maintaining the microclimate between skin and fabric unaltered, without however impairing or affecting the freedom of movement of the wearer to any extent.

Membranes of this kind are generally comprised of a polymeric alloy or a composite polymer, in which the polymeric matrix (prevailing phase) has a molecular weight that has decreased by at least 2% as compared with the one of the liquid-state polymer from which it has been derived, and a disperse phase in the form of particles, of which at least 80% in weight percentage have a size which is not larger than 30 micrometers, i.e. 30 x 10⁻⁶ metres.

Some non-limiting examples (1 to 3) of embodiment of membranes in accordance with the present invention are described hereinbelow, in which use is made of a high-energy grinding mill according to the disclosure in the afore-mentioned European patent No. 665 770. In all these examples, the mechano-chemical treatment in such high-energy grinding mill has been effective in bringing about a modification by more than 2% in the molecular weight of the liquid polymer forming the matrix.

### Example 1

By using the afore-described high-energy milling technique, a liquid polymer alloy has been produced starting from: (A) = polyester polyurethane (PU), which forms the prevailing elementary component, and (B) = polytetrafluoroethylene (PTFE) in the form of solid particles, which forms the second polymer of the same alloy. From an economic point of view, it is desirable that the particles of (B) have a size of not greater than 1 millimetre; however, it is anyway possible for smaller or even larger particles to be used, as far as this does not affect the economic conditions for the implementation of the present method. For the PU to be able to remain in its liquid state under processing conditions, also toluene and isobutyl alcohol are introduced in the high-energy grinding mill as solvents. The composition - in weight percent - of the components introduced in the mill is as indicated in Table 1 below:

| PU | PTFE | Toluene | Isobutyl alcohol |
|---|---|---|---|
| 45 | 15 | 10 | 30 |

The mechano-chemical treatment in the high-energy grinding mill is carried out without any supply of heat from the outside of the mill and has a duration of 1 hour. In the resulting polymeric alloy after 1 hour of grinding operation in the mill, the disperse phase in the PU matrix consists of solid PTFE particles, at least 80% in weighy of which have a size of less than 10 micrometers (10⁻⁵ meters), and just 5 micrometers (5 x 10⁻⁶ metres) on an average. The mixture itself has turned out as being most stable in the long run, without any phase separation.

By having the resulting blend spread out by a calender and the solvents allowed to evaporate, a film having a thickness of 15 micrometers (15 x 10⁻⁶ metres), and therefore of roughly the same order of magnitude of the solid PTFE particles, has been obtained therefrom. This film is suitable for use as an elastic transpiring membrane and is able to ensure mechanical and physical performance capabilities as listed below, which can be readily appreciated as being quite significant in view of the expected or intended use:
- Tensile elongation: 450%
- Water-column strength: 10 metres
- Water vapour permeability: 800 g/m² x 24 hr
- Softening point: >200°C

The next two examples, i.e. Examples 2 and 3, contemplate the addition of hygroscopic substances and/or water-soluble substances to the liquid polymer. The role of such additives in the end product, i.e. in the transpiring membrane, consists in promoting transpiration through the mechanisms of water absorption (hygroscopicity) and water ejection (porosity in the structure generated by the dissolution of the water-soluble compound), respectively.

### Example 2

By using the afore-described high-energy milling technique, a liquid polymer blend has been produced starting again from: (A) = polyester polyurethane (PU) in liquid form as the prevailing elementary component, and (B) = cellulose, which is a natural polymer, in the form of solid particles having a size that is most suitably not greater than 1 millimetre owing to the same reasons as already indicated in Example 1 above.

The PU is even in this case treated in its liquid state, thanks to the addition of toluene and isobutyl alcohol into the high-energy grinding mill as solvents. The composition - in weight percent - of the components introduced in the mill is as indicated in Table 2 below:

| PU | Cellulose | Toluene | Isobutyl alcohol |
|---|---|---|---|
| 45 | 15 | 10 | 30 |

The mechano-chemical treatment in the high-energy grinding mill is carried out without any supply of heat from the outside of the mill and has a duration of 2 hours.

In the resulting polymer alloy, obtained after 2 hours of grinding operation in the mill, the disperse phase of the alloy in the PU matrix consists of solid cellulose particles having a size of less than 10 micrometers (10⁻⁵ meters), and just 7 micrometers (7 x 10⁻⁶ metres) on an average. The blend itself has turned out as being most stable in the long run, without any phase separation.

By having the resulting blend spread out by a calender, the solvents allowed to evaporate, and the PU cross-linked with the use of melamine as a cross-linking catalyst in an amount equal to 5% in weight of the PU, a film having a thickness of 15 micrometers (15 x 10⁻⁶ metres) has been obtained from this alloy, which is suitable for use as an elastic transpiring membrane having following mechanical and physical properties:
- Tensile elongation: 100%
- Water-column strength: 8 metres
- Water vapour permeability: 850 g/m² x 24 hr
- Softening point: > 180°C

### Example 3

By using the afore-described high-energy milling technique, a composite liquid polymer has been produced starting from: (A) = polyester polyurethane (PU) in liquid form as the prevailing elementary component, and (B) = sodium chloride (NaCl) in the form of solid particles having a size that is most suitably not greater than 1 millimetre, owing to the same reasons as already indicated in Examples 1 and 2 above.

The PU is even in this case treated in its liquid state, thanks to the addition of toluene and isobutyl alcohol into the high-energy grinding mill as solvents. The composition - in weight percent - of the components introduced in the mill is as indicated in Table 3 below:

| PU | NaCl | Toluene | Isobutyl alcohol |
|---|---|---|---|
| 47 | 12 | 10 | 31 |

The mechano-chemical treatment in the high-energy grinding mill is carried out without any supply of heat from the outside of the mill and has a duration of 1 hour.

In the resulting composite polymer obtained after 1 hour of grinding operation in the mill, the disperse solid NaCl particles in the PU component have a size of less than 10 micrometers (10⁻⁵ meters), and just 2 micrometers (2 x 10⁻⁶ metres) on an average. The composite polymer itself is very stable in the long run, without any phase separation.

By having the resulting composite polymer spread out by a calender and the solvents allowed to evaporate, a film having a thickness of 15 micrometers (15 x 10⁻⁶ metres) has been obtained from this composite polymer. In this case, the development of the transpirability properties of the film - as required to produce an elastic transpiring membrane - has been obtained by submitting the polymer to a simple washing action with water aimed at causing NaCl particles to dissolve, whereby a porosity is obtained that is fully adequate in view of enabling water vapour to pass therethrough, but fine enough to prevent liquid water from permeating therethrough. The film obtained in this way has following mechanical and physical properties:
- Tensile elongation: 300%
- Water-column strength (after said washing with water): 2 metres
- Water vapour permeability: 900 g/m² x 24 hr

Alternatively, washing with water can be omitted, so that the NaCl particles will be in the composite polymer during the initial period of use of the membrane in an end product, e.g. a garment. Then, as time goes by, the same particles will be eventually dissolved by the water which they are exposed to under normal use conditions, so as to keep comfortably dry the parts of the wearer's body corresponding to the zones where the membrane is used and enable these zones to transpire exactly through the pores corresponding to the former positions of said NaCl particles within the matrix. The membrane remains fully transpiring even when all NaCl particles have been dissolved.

Further to the polyester-polyurethane used in the preceding Examples 1 to 3, the method according to the present invention can be used to treat a number of other kinds of polymers that are in the liquid state thereof under processing conditions, such as polyacrylate, polyvinyl, polyolefin, silicone, siloxane and similar polymers adapted to form and constitute the matrix of a polymeric alloy or a composite polymer. As solvents adapted to ensure the liquid state of the polymers under processing conditions there can be used hydrocarbon-, ester-, acetate-, alcohol-based and water-based solvents. Finally, as materials in the form of solid particles adapted to form the disperse phase there can be used other materials featuring corresponding properties in terms of hygroscopicity and water-solubility or, anyway, solubility resulting from said particles undergoing a treatment aimed at selectively dissolving them.

### Example 4

A second embodiment of the present invention relates to polymer resins in the liquid state being submitted to treatment in view of improving specific physical, i.e. mechanical, properties thereof. A principle based on the modification of the molecular weights - so as to have them increased by at least 2% in this particular case - has been used to obtain the desired mechano-chemical modification effect.

Through the use of the same high-energy grinding mill as the one employed in connection with the first afore-described embodiment of the present invention, a liquid epoxy resin has therefore been treated for a duration of 2 hours in view of increasing the post-curing hardness thereof. Hardness as a property to be modified has been taken into consideration exactly on the ground of the intended use of the liquid polymer resulting from this mechano-chemical treatment, i.e. as a protective coating for wooden floors, to ensure as high a scratch and abrasion strength as possible.

The result of hardness tests performed at temperatures of 25°C and 45°C, respectively, on the treated epoxy resin after curing in the presence of a suitable cross-linking catalyst added to an amount equal to 50% of the epoxy resin, are shown synthetically in Tables 4 and 5 below.

In a first case, the epoxy resin, in the liquid state thereof, has been treated alone in the high-energy mill, and the results of the related tests are indicated in the first line of said Tables 4 and 5.

In a second case, to the same liquid-state epoxy resin there have been added particles of soda-lime glass (float), in a proportion of 100-to-20 parts by weight, prior to its introduction in the high-energy grinding mill for carrying out the mechano-chemical treatment, which has again been carried on for a duration of 2 hours to result in a composite polymer. At the end of this treatment, the glass particles had a size of less than 5 micrometers (5 x 10⁻⁶ metres) in the case of at least 80% in weight of the same particles. The resulting composite polymer itself proved to be very stable in the long run, without any phase separation. The results of the related tests are indicated in the second line of Tables 4 and 5.

By way of comparison, indicated in the third line of the same Tables 4 and 5 below, there are the results of tests performed on the same epoxy resin, in the condition in which it had not been submitted to any mechano-chemical treatment in the high-energy grinding mill as described above.

**Table 4 (test temperature 25°C - Shore-D hardness):**

| | Hardness after 20 hrs | Hardness after 160 hrs |
|---|---|---|
| Resin only, after treatment | 70 | 73 |
| Resin + glass, after treatment | 77 | 77 |
| Resin only, untreated | 55 | 63 |

**Table 5 (test temperature 45°C - Shore-D hardness):**

| | Hardness after 20 hrs | Hardness after 160 hrs |
|---|---|---|
| Resin only, after treatment | 65 | 68 |
| Resin + glass, after treatment | 70 | 72 |
| Resin only, untreated | Not measurable (resin is not hardened) | 58 |

Readily appreciated from a comparison of the test results indicated in Tables 4 and 5 above is the fact that the resin (either or without addition of glass, when submitted in the liquid state to mechano-chemical treatment in the high-energy grinding mill, has hardness values that are far higher and are more quickly attained than in the case of untreated resin. Furthermore, at low temperatures (4°C), treated resins feature hardness values that are already quite satisfactory after just 20 hours, i.e. when untreated resin is still uncured (so that its harness cannot be measured, yet).

Further to treating epoxy resins, the mechano-chemical process of the present invention - as defined and recited in the appended claims - can be used to treat acrylate-based and polyester-based polyurethanes, obviously in the liquid state thereof. Moreover, additives in particulate form for providing composite polymers can be selected from among one or several of the following : inorganic compounds containing oxygen, carbon, nitrogen or boron as bound covalently even in mixed systems.

## Claims

1. Method for the treatment of a material comprising at least one polymer, **characterized in that** it is carried out on said polymer in its liquid state under processing conditions in a high-energy grinding mill at specific-energy values of the milling means of not less than 400 W/dm³ of treated material, i.e. net of the milling means themselves, to obtain an increase or decrease by at least 2% of the molecular weight of said at least one polymer.

2. Method according to claim 1, wherein said treatment is carried out without any heat being supplied from the outside of the grinding mill.

3. Method according to any of the preceding claims, wherein said at least one polymer is in its liquid state under processing conditions owing to at least a solvent being added thereto.

4. Method according to any of the preceding claims, wherein said at least one liquid-state polymer is selected from among: epoxy, polyester, polyurethane, polyacrylate, silicone and siloxane resins.

5. Method according to claim 3, **characterized in that** said at least one polymer is a polyester-based polyurethane or an acrylate-based polyurethane, and is in its liquid state under processing conditions due to the addition of at least a solvent selected from among : hydrocarbon-based, ester-based, acetate-based solvents, alcohols and water.

6. Method according to any of the preceding claims, wherein said at least one polymer in its liquid state forms an elementary component (A) of a mixture that also comprises at least a second elementary component formed of an organic, polymeric or non-polymeric material or an inorganic material (B) in liquid form or in the form of particles having preferably a size of not greater than 2 mm, and wherein the relative proportion by weight of said elementary components in said blend is : (A) ranging between 25 and 95% and (B) ranging between 5 and 75%.

7. Method according to claim 6, **characterized in that** it includes the steps of:
• filling a mixture of (A) and (B) into a high-energy grinding mill, wherein (B) is in form of particles;
• submitting said mixture to a mechano-chemical high-energy grinding treatment;
• interrupting the grinding treatment and unloading the resulting product upon reaching, in the matrix or prevailing phase formed by (A), a dispersion of (B) in the form of particles, at least 80% in weight of said particles having a size not larger than 100 micrometers and upon obtaining a variation in the molecular weight of (A) corresponding to an increase and/or decrease thereof by an amount of at least 2%.

8. Method according to claim 6, wherein (A) is a polymer selected from among : polyurethanes, polyacrylate, polyvinyl, polyolefin, silicone, siloxane polymers or combinations thereof, and (B) is selected from among a fluorinated polymer such as polytetrafluoroethylene, a natural polymer such as cellulose, a hygroscopic and/or water-soluble solid such as sodium chloride, a soluble inorganic compound as carbonates, phosphates, nitrates, or combinations thereof.

9. Method according to claim 6, wherein (A) is an epoxy resin and (B) is soda-lime glass.

## Patentansprüche

1. Verfahren zur Behandlung eines Materials umfassend mindestens ein Polymer, **dadurch gekennzeichnet, dass** es an diesem Polymer in dessen flüssigem Zustand durchgeführt wird unter Verarbeitungsbedingungen in einer Hochenergiemahlanlage bei spezifischen Energiewerten der Mahleinrichtungen von nicht weniger als 400 W/dm³ behandelten Materials, d.h. vermindert um die Mahleinrichtungen selbst, um einen Anstieg oder eine Verringerung um mindestens 2 % des Molekulargewichts des mindestens einen Polymers zu erhalten.

2. Verfahren nach Anspruch 1, wobei die Behandlung durchgeführt wird, ohne dass Wärme von außerhalb der Mahlanlage zugeführt wird.

3. Verfahren nach einem der vorhergehenden Ansprüche, wobei das mindestens eine Polymer unter Verarbeitungsbedingungen, die den Zusatz von mindestens einem Lösungsmittel erfordern, in seinem flüssigen Zustand vorliegt

4. Verfahren nach einem der vorhergehenden Anspräche, wobei das mindestens eine flüssige Polymer ausgewählt ist aus: Epoxid-, Polyester-, Polyurethan-, Polyacrylat-, Silikon- und Siloxankunststoffen.

5. Verfahren nach Anspruch 3, **dadurch gekennzeichnet, dass** das mindestens eine Polymer ein polyesterbasiertes Polyurethan oder ein acrylatbasiertes Polyurethan ist, und unter Verarbeitungsbedingungen in seinem flüssigen Zustand vorliegt aufgrund des Zusatzes mindestens eines Lösungsmittels ausgewählt aus: kohlenwasserstoffbasierten, esterbasierten, acetatbasierten Lösungsmitteln, Alkoholen und Wasser.

6. Verfahren nach einem der vorhergehenden Ansprüche, wobei das mindestens eine Polymer in seinem flüssigen Zustand einen Grundbestandteil (A) einer Mischung bildet, welche auch mindestens einen zweiten Grundbestandteil umfasst, der aus einem organischen, polymeren oder nicht-polymeren Material oder einem anorganischen Material (B) in flüssiger Form oder in Form von Partikeln mit einer Größe von vorzugsweise nicht mehr als 2 mm gebildet wird, und wobei der relative Gewichtsanteil der Grundbestandteile in der Mischung wie folgt ist: (A) liegt zwischen 25 und 95 % und (B) liegt zwischen 5 und 75 % vor.

7. Verfahren nach Anspruch 6, **dadurch gekennzeichnet, dass** es die folgenden Schritte umfasst:
- Einfüllen der Mischung aus (A) und (B) in eine Hochenergiemahlanlage, wobei (B) in Form von Partikeln vorliegt;
- Aussetzen der Mischung an mechano-chemische hochenergetische Mahlbehandlung;
- Unterbrechen der Mahlbehandlung und Entladen des resultierenden Produkts nach Erreichen, in der Matrix oder der vorherrschenden Phase, die durch (A) gebildet wird, einer Dispersion von (B) in Form von Partikeln, wobei mindestens 80 Ges.-% der Partikel eine Größe von nicht mehr als 100 Mikrometern aufweisen und nach Erhalten einer Veränderung des Molekulargewichts von (A) entsprechend einem Anstieg und/oder einer Verringerung dessen in einer Menge von mindestens 2 %.

8. Verfahren nach Anspruch 6, wobei (A) ein Polymer ist, ausgewählt aus: Polyurethanen, Polyacrylat, Polyvinyl, Polyolefin, Silikon, Siloxanpolymeren oder Kombinationen davon, und (B) ausgewählt ist aus einem fluorierten Polymer wie etwa Polytetrafluorethylen, einem natürlichen Polymer wie etwa Zellulose, einem hygroskopischen und/oder wasserlöslichen Feststoff wie etwa Natriumchlorid, einer löslichen anorganischen Verbindung wie etwa Karbonate, Phosphate, Nitrate oder deren Kombinationen.

9. Verfahren nach Anspruch 6, wobei (A) ein Epoxyharz ist und (B) Kalknatronglas ist.

## Revendications

1. Procédé pour le traitement d'un matériau comprenant au moins un polymère, **caractérisé en ce qu'**il est mis en oeuvre sur ledit polymère à l'état liquide dans les conditions de traitement dans un broyeur à haute énergie à des valeurs d'énergie spécifiques des moyens de broyage non inférieures à 400 W/dm³ de matériau traité, c'est-à-dire sans compter les moyens de broyage eux-mêmes, pour l'obtention d'une augmentation ou d'une diminution d'au moins 2 % de la masse moléculaire dudit au moins un polymère.

2. Procédé selon la revendication 1, dans lequel ledit traitement est mis en oeuvre sans application d'aucune chaleur depuis l'extérieur du broyeur.

3. Procédé selon l'une quelconque des revendications précédentes, dans lequel ledit au moins un polymère est à l'état liquide dans les conditions de traitement du fait qu'au moins un solvant lui a été ajouté.

4. Procédé selon l'une quelconque des revendications précédentes, dans lequel ledit au moins un polymère à l'état liquide est choisi parmi les résines époxy, de polyester, de polyuréthane, de polyacrylate, de silicone et de siloxane.

5. Procédé selon la revendication 3, **caractérisé en ce que** ledit au moins un polymère est un polyuréthane à base de polyester ou un polyuréthane à base d'acrylate, et est à l'état liquide dans les conditions de traitement du fait de l'addition d'au moins un solvant choisi parmi les solvants à base d'hydrocarbure, les solvants à base d'ester, les solvants à base d'acétate, les alcools et l'eau.

6. Procédé selon l'une quelconque des revendications précédentes, dans lequel ledit au moins un polymère à l'état liquide forme un composant élémentaire (A) d'un mélange qui comprend aussi au moins un deuxième composant élémentaire formé d'un matériau organique, polymère ou non polymère ou un matériau inorganique (B) sous forme liquide ou sous forme de particules ayant de préférence une taille ne dépassant pas 2 mm, et dans lequel la proportion relative en poids desdits composants élémentaires dans ledit mélange est : (A) situé dans la plage comprise entre 25 et 95 % et (B) situé dans la plage comprise entre 5 et 75 %.

7. Procédé selon la revendication 6, **caractérisé en ce qu'**il comprend l'étape consistant à :
• charger un mélange de (A) et (B) dans un broyeur à haute énergie, dans lequel (B) est sous la forme de particules ;
• soumettre ledit mélange à un traitement de broyage à haute énergie chimico-mécanique ;
• interrompre le traitement de broyage et décharger le produit résultant après qu'a été réalisée, dans la matrice ou la phase principale formée par (A), une dispersion de (B) sous la forme de particules, au moins 80 % en poids desdites particules ayant une taille ne dépassant pas 100 micromètres et après qu'a été obtenue une variation de la masse moléculaire de (A) correspondant à une augmentation et/ou à une diminution de celle-ci d'une ampleur d'au moins 2 %.

8. Procédé selon la revendication 6, dans lequel (A) est un polymère choisi parmi les polyuréthanes, le polyacrylate, le polyvinyle, les polyoléfines, le silicone, les polymères de siloxane et leurs combinaisons ; et (B) est choisi parmi un polymère fluoré tel que le polytétrafluoroéthylène, un polymère naturel tel que la cellulose, un solide hygroscopique et/ou soluble dans l'eau tel que le chlorure de sodium, un composé inorganique soluble tel que les carbonates, phosphates, nitrates, et leurs combinaisons.

9. Procédé selon la revendication 6, dans lequel (A) est une résine époxy et (B) est un verre sodocalcique.
